# EUROPÄISCHE PATENTSCHRIFT

(11) **EP 1 856 329 B1**
(45) Veröffentlichungstag und Bekanntmachung des Hinweises auf die Patenterteilung: **29.05.2013**
(21) Anmeldenummer: 06708636.3
(22) Anmeldetag: 03.03.2006
(51) Int. Cl.: E01C 19/00, E01C 19/48

(54) **Verfahren zur Steuerung einer Baumaschine und Baumaschine mit einem Steuerungssystem**
Method for controlling a construction machine and construction machine with a controlling system
Procédé pour commander une machine de génie civil et machine de génie civil avec un système de commande

(30) Priorität: 04.03.2005 US 71942
(43) Veröffentlichungstag der Anmeldung: 21.11.2007
(73) Patentinhaber: Leica Geosystems AG, 9435 Heerbrugg (CH)
(72) Erfinder: MAIER, Jürgen, 79787 Lauchringen (DE); PETSCHKO, Hansjörg, 8008 Zürich (CH); BISCONTIN, Reto, CH-6004 Luzern (CH)
(74) Vertreter: Kaminski, Susanne
(86) Internationale Anmeldenummer: PCT/EP2006/060448
(87) Internationale Veröffentlichungsnummer: WO 2006/092441

(56) Entgegenhaltungen:
- DE-A1- 10 138 563
- US-A- 3 618 484
- US-A- 5 599 134
- US-A- 5 935 183
- US-A1- 2004 234 336

## Beschreibung

Die Erfindung bezieht sich auf ein Verfahren zur Steuerung von Baumaschinen gemäss dem Oberbegriff des Anspruchs 1, sowie eine Baumaschine mit einem SteuerungsSystem gemäss dem Oberbegriff des Anspruchs 5.
Die Erfindung bezieht sich auf die Steuerung von Baumaschinen im Allgemeinen, insbesondere von Gleitschalungsfertigern mit variablen Rahmen und breiten Bohlen.

Gleitschalungsfertiger sind Baumaschinen mit einer charakteristischen Bohle, welche z.B. zum Einbau von Beton oder Asphalt dient. Die Bohle kann auch mit einem charakteristischen Profil ausgebildet sein, z.B. zum Herstellen von Schienen, Kanälen, oder Wasserrillen. Bohlen werden also für unterschiedlichste Anwendungen gefertigt, d.h. mit unterschiedlichen Bohlen-Profilen und insbesondere auch Bohlen-Breiten. So werden z.B. für den Einsatz auf Flughäfen, wie beispielsweise den Bau von Flugzeug-Landebahnen, gattungsgemäss gross dimensionierte Gleitschalungsfertiger mit möglichst breiten Bohlen benötigt. Dem Bedarf an variablen Bohlen für die vielfältigen Einsatzmöglichkeiten von Gleitschalungsfertigern wird von Maschinen-Herstellern mit der Entwicklung von Fertigern mit variablen Rahmen, welche ein Variieren der Bohlenbreite erlauben, Rechnung getragen. Die Steuerung von derartigen Strassenfertigern erfolgt im Allgemeinen über Referenzlinien-Abtastvorrichtungen. Dabei ertastet ein Sensor die Sollrichtung/Sollhöhe von einer Referenzlinie, wie beispielsweise einem gespannten Draht; Abweichungen von der Sollrichtung/Sollhöhe werden über eine Regeleinrichtung korrigiert.

So offenbart die DE 101 38 563 einen Rad-Strassenfertiger, der automatisch einer Referenzlinie folgt. In der US 5,599,134 erfolgt die Abtastung einer Referenzlinie berührungslos über UltraschallSensoren. Diese Art der Steuerung einer Maschine erfordert aber ein Abstecken der zu bearbeitenden Fläche vor dem Einsatz des Baufahrzeuges und ist sehr zeit- und arbeitsaufwändig.

In der US 2004/234336 wird ein Positionierverfahren für eine Baumaschine mit einem Referenzsystem in Form eines Systems von gespannten Kabeln beschrieben. Die US 5,935,183 offenbart ein Positionierverfahren für einen Erdarbeitsschild einer Maschine.

Ein von der Anmelderin Leica-Geosystems entwickeltes und in der WO 2006/070009 beschriebenes Verfahren sieht vor, zwei Masten mit Prismen auf den Querträgern eines starren, aus Längs- und Querträgern gebildeten Maschinenrahmens anzubringen und mit zwei Tachymeter oder Totalstationen Abstand und Richtung zu den Prismen, und damit die Position der Prismen bzw. der Maschine, zu bestimmen. Diese Tachymeter oder Totalstationen sind mit Vorteil motorisiert und in der Lage, den Reflektor automatisch zu verfolgen.
Ausserdem wird mit zwei Neigungssensoren eine zweidimensionale Neigung des Rahmens und damit die Orientierung des Fertigers gemessen. Die Steuerung des Gleitschalungsfertigers erfolgt über jeweils einen am - in Arbeitsrichtung - vorderen und hinteren Querträger berechneten Punkt bzw. über die Verbindung der beiden Punkte in Form einer Geraden. Diese Lösung lässt sich aber nicht bei Fertigern mit variablen Rahmen und Bohlenbreiten über 10m einsetzen. Das Verfahren zur Steuerung liefert bei Bohlenbreiten in der Grössenordnung von 10 und mehr Metern mit einer Steuerung über zwei Punkte nicht mehr die gattungsgemäss erforderliche Genauigkeit und ist auch bautechnisch auf Fertiger mit variablen Rahmen nicht anwendbar.

Die Aufgabe der vorliegenden Erfindung besteht daher darin, die Nachteile des Standes der Technik zu beheben und ein Verfahren bereitzustellen, vermittels welchem eine Steuerung von Baumaschinen, insbesondere von Gleitschalungsfertigern und insbesondere unabhängig von der Bohlenbreite und Rahmenvariabilität, ermöglicht wird.

Eine weitere Aufgabe der Erfindung ist es, ein System zur Durchführung des erfindungsgemässen Verfahrens bereitzustellen.

Diese Aufgaben werden durch die Merkmale des Anspruchs 1 bzw. des Anspruchs 5 gelöst. Alternative und/oder bevorzugte Lösungen werden durch die kennzeichnenden Merkmale der abhängigen Ansprüche beschrieben.

Das erfindungsgemässe Verfahren wird im Folgenden in der Anwendung auf Gleitschalungsfertiger bzw. auf die Steuerung von Gleitschalungsfertigern beschrieben. Das Verfahren ist jedoch keineswegs auf Gleitschalungsfertiger beschränkt, sondern kann auf alle Arten von beweglichen Maschinen, insbesondere Fahrzeuge und Baumaschinen, angewendet werden.

In einer ersten Variante werden zur Durchführung eines erfindungsgemässen Verfahrens einem Gleitschalungsfertiger - bzw. einer Baumaschine - mit einer charakteristischen Bohle wenigstens zwei Reflektoren und wenigstens ein - im Allgemeinen zwei Neigungssensor/en zugeordnet. Der Gleitschalungsfertiger ist dabei im Allgemeinen eine handelsübliche Baumaschine mit einem Fahrgestell, welches sich aus einem Maschinenrahmen mit parallel zur Arbeitsrichtung verlaufenden Längsträgern und quer zur Arbeitsrichtung verlaufenden Querträgern, sowie mehreren höhenverstellbaren Fahrwerken - z.B. mit lenkbaren Kettenlaufwerken zusammensetzt. Die Fahrwerke können, insbesondere voneinander unabhängig, beispielsweise über Zylinder in der Höhe und Lage verstellt werden, sie halten die Ebene des Maschinenrahmens in einer vorgegebenen Höhe und Lage. Die Fahrwerke könnten auch quer zur Arbeitsrichtung verstellbar sein, z.B. mittels verfahrbarer Schiebetraversen. Ebenfalls könnte das Fahrzeug als Rad-Fertiger mit Rädern als Laufwerke ausgebildet sein, oder auch als Schienenfahrzeug.

Der Rahmen des Fertigers ist vorzugsweise variabel, beispielsweise seitlich ausfahrbar, um den Einsatz von Bohlen unterschiedlicher Breite zu ermöglichen. Das Verfahren ist aber nicht auf variable Rahmen beschränkt, sondern kann selbstverständlich auch bei Baumaschinen mit starrem Rahmen angewendet werden.

Ein grosser Teil der handelsüblichen Gleitschalungsfertiger ist heute jedoch mit variablem Rahmen ausgeführt, der Rahmen kann dabei in allen möglichen Varianten - z.B. mit teleskopartig ausziehbaren Einheiten - variabel gestaltet sein. Derartige Gleitschalungsfertiger werden z.B. von der Firma Wirtgen aus Deutschland oder der Firma Gomaco aus den USA angeboten. Ein variabler Rahmen ist beispielsweise aus zwei starken, starren Längsträgern und zwei variablen Querträgern zusammengesetzt. Die Querträger sind beispielsweise teleskopartig ausfahrbar. Auf dem sozusagen ausziehbaren Rahmen ist eine Plattform - eine Art "virtueller" innerer Rahmen, z.B. für einen Fahrerstand - vorsehbar. Eine Bohle ist unten am Maschinenrahmen befestigt, vorteilhafterweise starr. Die Bohle ist vorzugsweise an den Längsträgern befestigt und in der Mitte mit dem sogenannten inneren Rahmen über einen höhenverstellbaren Zylinder verbunden. Die Bohle kann als Glättebohle ausgebildet sein, d.h. ohne Profil, sie kann genauso ein charakteristisches Profil, wie z.B. zum Gleisbau, aufweisen. Sie kann auch zwei- oder mehrteilig sein und im nicht-einstückigen Fall beispielsweise in der Mitte der Arbeitsbreite gelenkig miteinander verbundene Bohlenteile aufweisen. Vorzugsweise ist die Bohle bzw. Maschine so ausgebildet, dass sie in ihrer Breite (Arbeitsbreite) verstellbar ist. So könnten ausziehbare Bohlen-Einrichtungen vorhanden sein, oder aber die Bohle derart ausgebildet sein, dass weitere BohlenTeile angefügt oder angesteckt werden können. Einsatzmöglichkeiten für Gleitschalungsfertiger-Bohlen und damit verbunden charakteristische Bohlen-Profile stellen z.B. der Bau von Strassen und Bordsteinen, Flugzeuglandebahnen, Gleise, etc. dar. Insbesondere stellen die unterschiedlichen Anwendungen auch unterschiedliche Anforderungen an die gewünschte Bohlenbreite. So ist selbstverständlicherweise für den Bau einer Flugzeuglandebahn eine breitere Bohle erwünscht als für den Bau eines Gehsteigs. Im Handel sind Bohlen mit Breiten von bis zu ca. 16 m erhältlich. Um für unterschiedliche Anwendungen ein und dasselbe Fahrzeug einsetzen zu können, werden heute Gleitschalungsfertiger mit der Möglichkeit zur Bohlenbreiten-Veränderung angeboten. Dies bedingt insbesondere auch den bereits erwähnten variablen Maschinenrahmen.

Die Bohle ist im Allgemeinen an den Längsträgern des Rahmens fixiert. Vorteilhafterweise ist die Bohle auch in ihrer Mitte und der Mitte des Gleitschalungsfertiger-Rahmens mit dem Rahmen verbunden, meist über einen Zylinder, vermittels welchem eine Voreinstellung bzw. Einstellung der Bohle bezüglich deren Durchhängens wählbar bzw. einstellbar ist.

Da die Bohle sehr breit - z.B. 16m - sein kann, ist mit einem Durchhängen der Bohle zu rechnen. Dieses Durchhängen der Bohle kann vor Arbeitsbeginn mittels des verstellbaren Zylinders an die Arbeitsgegebenheiten und -bedingungen adaptiert werden. Es kann, falls gefordert bzw. gewünscht, die Bohle auch mit einer gewissen Durchbiegung oder Anhebung in der Mitte eingestellt werden. Dieser Schritt erfolgt vorzugsweise vor dem aktiven Einsatz des Fahrzeugs, es wäre aber auch eine automatische Anpassung bzw. Korrektur der Bohlen-Durchbiegung während der Durchführung der Bauarbeiten denkbar. Bei manueller (oder automatischer) Einstellung vor Arbeitsbeginn kann eine Nachjustierung im Laufe der Arbeiten erforderlich sein.
Anhand der ausfahrbaren Zylinder ist der Fertiger-Rahmen in seiner Lage und Höhe einstellbar, und damit auch die Einbauhöhe und Lage der am Fertiger befestigten Bohle.

Das erfindungsgemässe Verfahren sieht in der ersten Variante vor, zu dem Gleitschalungsfertiger-Rahmen - vorzugsweise den Längsträgern - zugeordneten, im Allgemeinen daran befestigten, Reflektoren jeweils den Abstand, die Höhe und die Richtungen zu messen. Dies liefert die Position des Maschinenrahmens bzw. der Bohle. Dazu wird mit dem Rahmen, insbesondere den Längsträgern, zugeordneten, insbesondere darauf angebrachten bzw. in die Träger integrierten Neigungssensoren (bzw. unter Umständen auch nur einem Neigungssensor), die Längs- und Querneigung des Rahmens - und damit auch der Bohle - bestimmt. Die Neigung des Rahmens könnte auch mit einem anderen Mittel zur Neigungsbestimmung festgestellt werden, z.B. durch den Reflektoren zugeordnete, insbesondere vorgeschaltete, Polarisationsfilter.

Zur Positionsbestimmung des Maschinenrahmens bzw. der Bohle werden Messinstrumente eingesetzt, mit denen von einer geeigneten Position im Gelände aus die reflektiven Elemente auf der Baumaschine vermessen werden. Vorzugsweise wird die Position von zwei auf der Maschine angebrachten Reflektoren mittels Theodoliten und Laser-Entfernungsmessern oder Tachymetern gemessen. Für eine Messung auf zwei reflektive Bereiche werden z.B. zwei Tachymeter eingesetzt, welche jeweils den Abstand, die Höhe und die Richtungen zu einem reflektiven Bereich messen. Die Messung erfolgt von einer definierten Position im Gelände aus. Durch die Richtungs-, Höhen- und Entfernungsmessung mit den Tachymetern zu den mit dem Gleitschalungsfertiger in definierter geometrischer Beziehung stehenden reflektiven Bereichen und der bekannten Position der Tachymeter kann die Position der Reflektoren bzw. des Fertigers bestimmt werden. In Verbindung mit einer automatisierten Zielerkennung und Zielverfolgung kann eine quasi-kontinuierliche Positionsbestimmung erreicht werden. Voraussetzung für die Messung ist die Sichtverbindung zwischen Tachymetern und Reflektoren.

Die am Fertiger-Rahmen oder der Bohle mittel- oder unmittelbar angebrachten Reflektoren sind bevorzugt als Rundumreflektoren ausgebildet und mit einem Reflektorträger - im Allgemeinen ein Mast - verbunden. Es können zylinder- oder kugelförmige 360°-Reflektoren eingesetzt werden, genauso Tripelprismen, polierte Stahlelemente, verspiegelte Glaselemente, mit Reflektorfolie umhüllte Elemente, oder aus reflektivem Material ausgebildete Elemente, insbesondere Kugeln. Vorzugsweise werden Rundumreflektoren für die Messung verwendet, um eine Messung in jeder Stellung des Gleitschalungsfertigers zu ermöglichen.
Die Masten mit den Reflektoren sind dem Maschinenrahmen oder der Bohle zuordenbar, im Allgemeinen werden sie am Rahmen angebracht. Je nach Anwendung können Höhe der Masten und Art der Reflektoren variiert werden. Vorzugsweise erfolgt die Anbringung am - in Fahrtrichtung der Maschine - hinteren Ende der starken Rahmen-Längsträger möglichst nahe an den Fahrwerken und der Bohle, um ein möglichst sensitives System bereitzustellen. Diese Anordnung der Prismen bzw. der Masten bewirkt die grösstmögliche Empfindlichkeit der Messung bezüglich Positionsänderungen der Maschine.

Eine zweite Variante zur Bestimmung der Lage einer Baumaschine und damit deren Steuerung ist eine Positionsbestimmung mittels globaler Positionierungssysteme, wie z.B. GPS zusammen mit der Orientierungsbestimmung der ersten Variante. Globale Positionierungssysteme stellen jedoch nicht immer die benötigte Genauigkeit der Positionsbestimmung bereit bzw. erfordern im Allgemeinen einen erhöhten Aufwand, z.B. durch Nutzung einer Referenzstation, oder die Inkaufnahme längerer Messzeiten. Auch stellt sich das Problem, dass aus GPS-Signalen ermittelte Koordinaten für die meisten Bauvorhaben keine ausreichende Genauigkeit - speziell bezüglich der Höhe der Baumaschine - aufweisen. Jedoch - bei entsprechendem Aufwand und/oder in Abhängigkeit vom vorgesehenen Einsatz - ist zur Durchführung des erfindungsgemässen Verfahrens auch eine mögliche, vorteilhafte Positionsbestimmung von Punkten auf der Baumaschine mit einem globalen Positionierungssystem - GPS - zur Positionsbestimmung denkbar, bei welcher die Antennen des GPS-Empfangssystems entsprechend der Anordnung der Reflektoren der Baumaschine zugeordnet sind. Eine Signalverarbeitungseinheit kann dabei unabhängig von den GPS-Empfängerantennen positioniert sein. Weiters ist in der zweiten Variante vorteilhaft eine GPS-Referenzstation vorsehbar.

Zur Positionsbestimmung kann das System im Bedarfsfalle mit Komponenten zur Erhöhung der vertikalen Genauigkeit erweitert werden, z.B. mit einem oder mehreren Laser-Ebenen-Generatoren und entsprechenden Empfängern.

Die Bestimmung der Längs- und Querneigung des Gleitschalungsfertigers bzw. des Rahmens bzw. der Bohle erfolgt in der ersten und zweiten Variante vorzugsweise mit Neigungssensoren auf den Längsträgern des Maschinenrahmens - im Allgemeinen wird auf jedem der beiden Längsträger ein Neigungssensor angebracht. Je nach Anwendung und benötigter Messgenauigkeit kann auch ein Neigungssensor zur Neigungsbestimmung ausreichen. Die Positionierung des jeweiligen Neigungssensors erfolgt vorzugsweise in der Mitte des jeweiligen Längs-Trägers, die Neigung wird sowohl in Längs-, als auch in Querrichtung bestimmt, d.h. es wird ein zweiachsiger Neigungssensor, eingesetzt.

Es versteht sich, dass zur Durchführung des erfindungsgemässen Verfahrens auch andere bekannte Positionierungssysteme zur Positionsbestimmung von - insbesondere zwei - Punkten auf der Baumaschine eingesetzt werden können. Insbesondere sind auch Systeme einsetzbar, welche zur jeweiligen Position auch Orientierungsinformation liefern, womit zusätzlich die Neigungssensoren ersetzt werden können.

Beispielsweise kann auch die erste und zweite Variante dahingehend verändert werden, dass lediglich eine Position mit Hilfe von Reflektoren, GPS oder anderen Positioniersystemen erfasst wird und mindestens die Fahrzeugachse parallel oder quer zur Fahrtrichtung mit einem Kompass oder einem anderen Richtungsgeber bestimmt wird und die Punkte A1 bis A4 daraus abgeleitet werden.

In einem ersten Schritt sieht das erfindungsgemässe Verfahren nun vor, ein Referenz-Geländemodell in eine mit dem Gleitschalungsfertiger kommunizierende Kontrolleinheit einzuspielen. Die Kontrolleinheit setzt sich beispielsweise aus einem Datenverarbeitungs- und Steuermodul (z.B. Computer und Controller)zusammen.
Unter Referenz-Geländemodell ist ein Modell zu verstehen, in welchem Modell ein geplantes Projekt - z.B. eine Strasse - in das bestehende Gelände eingebettet ist. Das Referenz-Geländemodell beschreibt das geplante Soll-Gelände. Aus dem Referenz-Geländemodell lassen sich in bekannter Art und Weise Soll-Positionen für Geländebearbeitungs-Einrichtungen, wie z.B. eine Bohle, ableiten. Es versteht sich, dass ein Referenz-Geländemodell genauso Soll-Werte für z.B. einen Fahrtweg und daraus Soll-Werte für Fahrzeug-Positionen bereitstellen kann.
Im Referenz-Gelände werden Messinstrumente, vorzugsweise Totalstationen oder Tachymeter, aufgestellt, welchen Messinstrumenten definierte Punkte - Koordinaten im Referenz-Gelände bzw. im Referenz-Geländemodell - zugeordnet werden - z.B. durch Platzierung der Instrumente an definierten Koordinaten (bereits eingemessenen Punkten) des Referenz-Geländes oder durch Einmessen der Instrumente in das Referenz-Gelände.

Dem Gleitschalungsfertiger werden in der ersten Variante zwei reflektive Elemente zugeordnet, vorzugsweise werden Masten mit Reflektorprismen am Rahmen angebracht. Die Reflektorprismen haben durch eine zuvor durchgeführte Einmessung definierte Koordinaten in einem lokalen Maschinen-Koordinatensystem. Erfolgt nun eine Messung vom Messgerät bzw. den Messgeräten im Referenz-Gelände auf das bzw. die Prisma/en, so werden vermittels dieser Messung den jeweiligen Prismen Koordinaten im Referenz-Gelände bzw. im Referenz-Geländemodell zugeteilt.

Die Messinformationen der Messgeräte im Referenz-Gelände, sowie der Neigungssensoren werden an die Kontrolleinheit kommuniziert - z.B. über Funk. Vermittels der Bestimmung der Positionen der Reflektorprismen - und damit der Position des mit den Prismen in definierter geometrischer Beziehung stehenden Fertigers, bzw. der Bohle - im Referenz-Gelände bzw. im Referenz-Geländemodell können zusammen mit den Informationen aus den Messungen mit den Neigungssensoren die Ist-Positionen von vier Punkten A1-A4 auf dem Fertigerrahmen bzw. der Bohle im Referenz-Gelände bzw. im Referenz-Geländemodell berechnet werden. Die Ist-Positionen dieser vier Punkte A1-A4 im Referenz-Geländemodell werden mit den im Referenz-Geländemodell angegebenen Soll-Positionen für die Punkte verglichen und die Positionsabweichung der Maschine bzw. der Bohle - z.B. über die höhenverstellbaren Laufwerke - entsprechend korrigiert. Dabei erfolgt die Berechnung im Allgemeinen vermittels eines Datenverarbeitungsmoduls, wie einem Computer, der Kontrolleinheit und die Steuerung vermittels eines Steuermoduls, wie einem Controller, der Kontrolleinheit. Beispielsweise berechnet der Datenverarbeitungsmodul die Abweichung der Ist- von der Soll-Position und gibt entsprechende Korrektur-Stellwerte für die Zylinder an das Steuermodul. Die Kontrolleinheit befindet sich vorzugsweise auf der Baumaschine und kann von einem Fahrer bedient werden, oder aber die Maschine automatisch steuern.

Anhand des erfindungsgemässen Verfahrens erfolgt also eine Steuerung der Maschine und damit der Einbauhöhe sowie Lage der Bohle über vier Punkte am Maschinenrahmen bzw. der Bohle, deren Ist-Positionen in der ersten Variante anhand der Positionsbestimmung der Reflektoren, sowie der Messungen durch die Neigungssensoren auf dem Rahmen bestimmt werden.

In der zweiten Variante werden die Ist-Positionen der vier Punkte A1-A4 im Referenz-Gelände im Wesentlichen analog zur ersten Variante bestimmt, nur erfolgt anstelle der Positionsbestimmung der Reflektoren der ersten Variante eine Positionsbestimmung zweier GPS-Empfängerantennen. Wie in der ersten Variante werden dann die Ist-Positionen der Punkte A1-A4 im Referenz-Geländemodell anhand der Kontrolleinheit, insbesondere dem Datenverarbeitungsmodul, berechnet und mit den Soll-Positionen der Punkte A1-A4 im Referenz-Geländemodell verglichen. Die Maschine wird dann über die Kontrolleinheit, insbesondere den Steuermodul, gesteuert.

Das erfindungsgemässe Verfahren und die erfindungsgemässe Baumaschine werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein System zur Durchführung des erfindungsgemässen Verfahrens,
- Fig. 2: einen Gleitschalungsfertiger mit Reflektoren und Neigungssensoren,
- Fig. 3: in zwei Teilfiguren 3a und 3b ein Tachymeter und einen Mast mit Reflektor als Komponenten des Systems,
- Fig. 4: in zwei Teilfiguren 4a und 4b Skizzen zur Erläuterung des erfindungsgemässen Verfahrens zur Steuerung des Gleitschalungsfertigers.
- Fig. 5: einen Gleitschalungsfertiger mit GPS

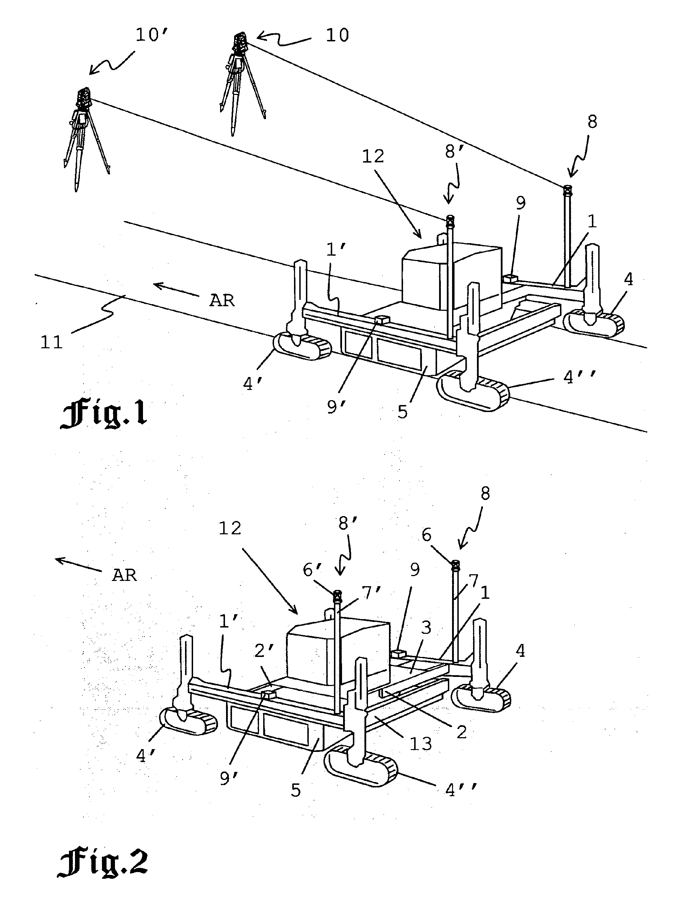

Die Figuren werden im Folgenden zusammenhängend beschrieben. Die Grössenverhältnisse der dargestellten Objekte sind nicht als massstäblich zu betrachten. Die Figuren 1 bis 4 beziehen auf eine erste Ausführungsvariante der Erfindung, die zur Positionsbestimmung Tachymeter und Reflektoren einsetzt. Es versteht sich, dass damit auch weitere Ausführungsvarianten beschrieben sind, wobei anstelle der Tachymeter und Reflektoren globale, oder auch lokale Positioniersysteme mit ihren Antennen vorgesehen sind. In der folgenden Beschreibung gelten sinngemäss die Gegebenheiten für die erste Ausführungsform auch für die weiteren Ausführungsformen.

In Fig. 1 wird schematisch ein System zur erfindungsgemässen Steuerung eines Gleitschalungsfertigers gezeigt. Dargestellt ist ein Gleitschalungsfertiger mit einer Bohle 5, welcher über eine Fläche 11 fährt. Man kann sich vorstellen, dass die Fläche 11 mit z.B. Frischbeton beschüttet ist. Der Gleitschalungsfertiger zieht die Bohle 5 über die Fläche 11 zur Erzeugung einer ebenen Oberfläche, z.B. für eine Flugzeuglandebahn. Nachdem sich bei ebenen glatten Oberflächen Unebenheiten in der Grössenordnung von mm bereits bemerkbar machen, ist eine hohe Genauigkeit in der Einbauhöhe und Lage der Bohle 5 gefordert. Um den Gleitschalungsfertiger bzw. die Bohle 5 nun mit hoher Genauigkeit zu steuern, werden erfindungsgemäss zwei Reflektoren 6,6' am Fertiger angebracht. Die Reflektoren 6,6' sind hier als Rundumprismen ausgebildet und an Masten 7,7' angebracht. Ein solcher Reflektormast 8,8' ist jeweils auf einem Längsträger 1,1' des Fertiger-Rahmens befestigt. Die Anordnung des Reflektormasts 8,8' erfolgt am - in Arbeitsrichtung AR des Fertigers - hinteren Ende der Rahmen-Längsträger und möglichst am äusseren Rand der Träger, d.h. möglichst nahe an den Fahrwerken 4,4'. Damit wird eine hohe Sensitivität des Systems erreicht, indem sich Positionsänderungen des Fertigers auf die Positionen der Reflektoren 6,6' übertragen und das System damit auf kleinste Änderungen der Lage und Höhe des Fertigers bzw. der Bohle 5 reagiert. Weiters am Rahmen angebracht sind zwei Neigungssensoren 9,9', jeweils ein Neigungssensor 9,9' auf jeweils einem Längsträger 1,1' des Rahmens. Die Sensoren sind in der Mitte des Rahmens befestigt und messen sowohl die Längs- als auch die Querneigung des Rahmens bzw. Fertigers bzw. der Bohle 5. Im Gelände sind an definierten Punkten zwei Tachymeter 10,10' aufgestellt, mittels welcher die Reflektoren 6,6' auf dem Gleitschalungsfertiger vermessen werden. Mit jeweils einem Tachymeter 10,10' wird jeweils die Position eines Reflektors 6,6' am Fertiger bestimmt. Für die zeitgleiche Vermessung der beiden reflektiven Bereichen werden zwei Tachymeter 10,10' eingesetzt. Mit den Informationen von Tachymetern 10,10' und Neigungssensoren 9,9' ist eine Berechnung von Punkten A1,A2,A3,A4 am Gleitschalungsfertiger möglich, welcher anhand dessen über einen Vergleich der gemessenen Ist-Positionen mit den gewünschten Soll-Positionen der Punkte A1,A2,A3,A4 automatisch in Position und Orientierung steuerbar ist. Gleichzeitig wird damit die Einbauhöhe und Lage der mit dem Fertiger verbundenen Bohle gesteuert.

In Fig. 2 dargestellt ist ein Gleitschalungsfertiger mit variablem Rahmen und variabler Bohlenbreite. Der Fertiger-Rahmen ist aus zwei starken Längsträgern 1,1' (Träger parallel zur Fahrt- und Arbeitsrichtung AR) und zwei quer zur Arbeitsrichtung AR verlaufenden Querträgern 2,2' zusammengesetzt.
Über die Querträger 2,2' ist eine Art Plattform oder innerer Rahmen 3 gelegt. Auch ist der Gleitschalungsfertiger hier mit einem Aufsatz 12, welcher z.B. einen Motor, Fahrerstand und eine Kontrolleinheit umfassen kann, ausgestattet. Es versteht sich, dass das Fahrzeug auch vermittels einer externen Kontrolleinheit gesteuert werden kann.
Die Querträger 2,2' sind in der Breite verstellbar, z.B. teleskopartig ausziehbar. Dies ermöglicht insbesondere den Einsatz einer Bohle 5, deren Breite variierbar ist. Nachdem für unterschiedliche Anwendungen meist unterschiedliche Bohlenbreiten benötigt werden, ist es praktisch und kostengüngstig, einen einzigen Gleitschalungsfertiger für unterschiedliche Einsätze verwenden zu können, indem dessen Bohle 5 auf unterschiedliche Breiten eingestellt werden kann. Dargestellt sind auch die beiden Reflektormaste 8,8' mit an Masten 7,7' befestigten Reflektoren 6,6' am in Fahrtrichtung hinteren Bereich der beiden Längsträger 1,1' möglichst nahe an den Fahrwerken 4,4'. Die Neigungssensoren 9,9' sind in der Mitte der Längsträger 1,1' angebracht. Der Gleitschalungsfertiger weist hier noch einen Träger 13 für eine Glätte-Einrichtung auf.

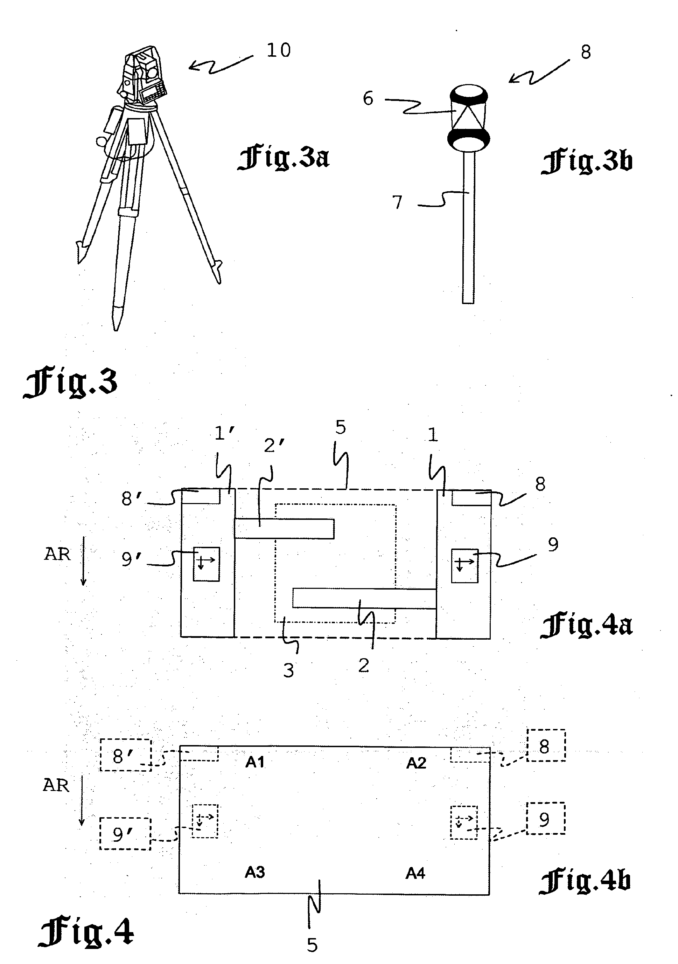

Fig. 3 zeigt zwei Komponenten des Systems. In Fig. 3a dargestellt ist ein Tachymeter 10, mittels welchem die Position des Reflektors 6 im Koordinatensystem des Tachymeters 10 bestimmt wird. Der Tachymeter 10 wird an einer Position definierter Koordinaten - im Koordinatensystem eines Referenz-Geländemodells - aufgestellt. Mit der Vermessung eines Reflektors 6 anhand des Tachymeters 10 werden also die Koordinaten des Reflektors 6 im Referenz-Geiändemodell bzw. im durch das Modell beschriebenen Referenz-Gelände bestimmt. In Fig.3b ist ein Reflektormast 8 dargestellt, der auf dem Gleitschalungsfertiger eingesetzt bzw. auf denselben aufgesetzt und mittel- oder unmittelbar mit dem Fertiger verbunden werden kann. Der Reflektormast 8 setzt sich aus einem Mast 7, z.B. ein Stab aus Metall, und einem reflektiven Element zusammen. Der Reflektor 6 ist hier als Rundumprisma ausgebildet. Genauso können kugel- oder zylinderförmige Rundumreflektoren oder mit Reflektorfolie umhüllte Elemente bzw einfach verspiegelte Formen, z.B. Kugeln, oder auch mehr als nur ein einzelner reflektiver Bereich eingesetzt werden.

In Fig. 4 ist das erfindungsgemässe Verfahren skizzenhaft erläutert.
In Fig. 4a ist in Draufsicht ein Gleitschalungsfertiger-Rahmen schematisch dargestellt. Der Rahmen ist aus zwei starken, starren Längsträger 1,1' und zwei Querträgern 2,2' aufgebaut. Die Querträger 2,2' sind teleskopartig ausziehbar und erlauben eine Variation in der Breite des Fertigers. Auf den Längsträgern 1,1' sind die Positionen der Reflektormaste 8,8' und Neigungssensoren 9,9' gezeigt. Es ist ersichtlich, dass die Reflektormaste 8,8' jeweils am in Arbeitsrichtung AR hinteren Ende der beiden Längsträger 1,1' und möglichst nahe den Fahrwerken 4,4' platziert sind. Auf jedem Längsträger 1,1' ist ausserdem - vorzugsweise mittig - ein Neigungssensor 9,9' angeordnet.
In der Mitte des Fertiger-Rahmens ist durch Punkt-Striche eine Art "virtueller" innerer Rahmen 3 angedeutet. Das ist hier ein Rahmenaufsatz, welcher Rahmenaufsatz an den Rahmen-Querträgern befestigt ist.
Die gestrichelten Linien deuten die Position der Bohle 5 an, welche unter dem Rahmen angebracht ist. Die Bohle 5 ist an den Längsträgern 1,1' des Maschinenrahmens befestigt und ausserdem in der Mitte des inneren Rahmens 3 über einen nicht dargestellten Zylinder mit dem Rahmen befestigt. Der Zylinder ermöglicht eine Höheneinstellung der Bohle 5, insbesondere lässt sich damit dem Durchhängen von Bohlen 5 - das vor allem bei breiten Bohlen 5 eine Rolle spielt - entgegenwirken. Die Höheneinstellung der Bohle 5 - in deren Mitte - wird im Allgemeinen vor Beginn der Gleitschalungsfertiger-Arbeiten durchgeführt. Für manche Anwendungen kann es erforderlich sein, die Bohle 5 nicht als ebene Bohle 5, sondern mit einer Durchbiegung oder Anhebung in der Bohlenmitte einzustellen. Die Einstellungen werden im Allgemeinen während der Arbeiten nachjustiert.

Fig. 4b zeigt eine Skizze der Bohle 5 mit Projektionen der Reflektor- und Neigungssensorpositionen 8,8', 9,9' und den vier aus den Tachymeter- und Neigungssensormessungen berechneten Punkten A1,A2,A3,A4. Durch die Messungen vermittels der in ein Referenz-Gelände eingeordneten Tachymeter 10,10' zu den Reflektoren 6,6' werden deren Positionen im Referenz-Gelände bestimmt. Aus dieser Information, den zusätzlichen Messwerten der Neigungssensoren 9,9' und der bekannten geometrischen Beziehung der Reflektoren 6,6' zum Maschinenrahmen bzw. zur Bohle 5 können die Punkte A1, A2, A3 und A4 berechnet werden. Diese berechneten Positionen der Punkte A1-A4 stellen Ist-Werte bzgl. der Bohlenposition im Koordinatensystem des Referenz-Geländes dar. Durch Vergleich mit Soll-Werten (oder Soll-Koordinaten) des Referenz-Geländes können Stellwerte für die Zylinder der Laufwerke 4,4' abgeleitet werden und der Gleitschalungsfertiger bzw. die Bohle 5 in Lage und Höhe automatisch gesteuert werden.

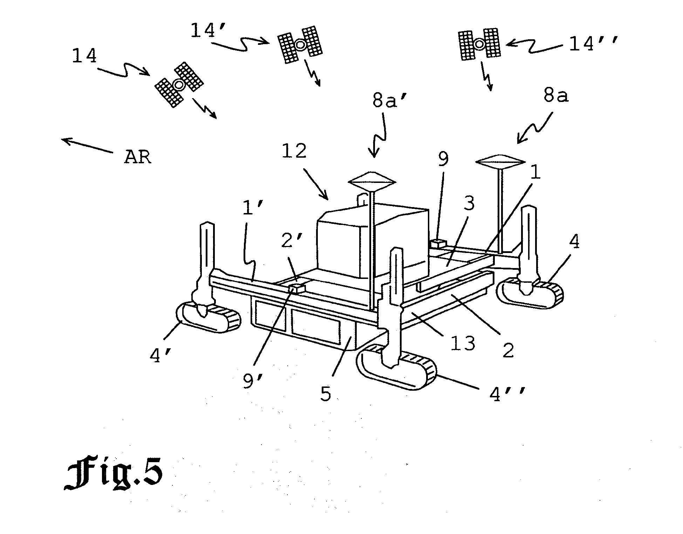

In Fig. 5 zeigt eine Ausführungsform für eine zweite Variante eines Systems zur Durchführung des erfindungsgemässen Verfahrens. Analog zu Fig. 2 ist ein Gleitschalungsfertiger dargestellt, auf dessen Längsträgern (1,1') jedoch anstelle der Reflektormaste (8,8') GPS-Empfängerantennen (8a,8a') angeordnet sind. Über Satellitensignale von GPS-Satelliten (14,14', 14") - die hier in ihrer Anzahl und Anordnung rein nur zur anschaulicheren Erläuterung dargestellt sind - wird die (globale) Position des Gleitschalungsfertigers bestimmt. Signalverarbeitungseinheiten können in bekannter Art und Weise positioniert sein - z.B. auf der Maschine oder extern.

## Patentansprüche

1. Verfahren zur Steuerung in Bezug auf Richtung und Höhenlage einer in einer Arbeitsrichtung relativ zu einem Referenzgelände bewegbaren Baumaschine mit
• einem Maschinenrahmen mit einem linken und rechten, im Wesentlichen parallel zur Arbeitsrichtung (AR) verlaufenden, Längsträger (1,1'),
• Laufwerken (4,4'), die anhand von Stellgliedern, insbesondere Zylindern, in Richtung und Höhe verstellbar sind und
• einer Geländebearbeitungs-Einrichtung, insbesondere einer Bohle (5), wobei die Geländebearbeitungs-Einrichtung mit den Längsträgern (1,1') mittel- oder unmittelbar verbunden ist,
mit den Schritten
• Bereitstellen von Informationen über den drei-dimensionalen Soll-Zustand eines zu bearbeitenden Geländes,
• Ableiten von Informationen über die drei-dimensionale Soll-Position der Geländebearbeitungs-Einrichtung,
• Bereitstellen von Informationen über die drei-dimensionale Ist-Position der Geländebearbeitungs-Einrichtung bezüglich der Soll-Position,
• Ableiten einer Steueranweisung für die Baumaschine durch Vergleich der drei-dimensionalen Soll- und Ist-Positionen,
• Steuern der Richtung und der Höhenlage der Baumaschine gemäss der abgeleiteten Steueranweisung,
**dadurch gekennzeichnet, dass**
die Informationen über die Ist-Position anhand der Ermittlung der Positionen von wenigstens vier der Geländebearbeitungs-Einrichtung zuordenbaren Punkten (A1,A2,A3,A4) gegenüber den Positionen von, insbesondere wenigstens zwei, Punkten im Referenz-Gelände erhalten werden, wobei die Positionen der wenigstens vier Punkte (A1,A2,A3,A4) auf der Geländebearbeitungs-Einrichtung ermittelt werden durch:
- Ermittlung der Längs- und Querneigung des linken und/oder rechten Längsträgers (1,1'),
- Ermittlung der Position eines Punktes auf dem linken Längsträger (1) gegenüber der Position eines Punktes im Referenz-Gelände,
- Ermittlung der Position eines Punktes auf dem rechten Längsträger (1') gegenüber der Position eines Punktes im Referenz-Gelände,
- Ableiten der Positionen der wenigstens vier Punkte (A1, A2, A3, A4) im Referenz-Gelände.

2. Verfahren nach Anspruch 1, **dadurch gekennzeichnet, dass** dem linken und rechten Längsträger (1,1') jeweils ein Reflektor (6,6') zugeordnet wird und die Positionen der wenigstens vier Punkte (A1,A2,A3,A4) auf der Geländebearbeitungs-Einrichtung ermittelt werden, indem
- die Positionen der Reflektoren (6,6') im Referenz-Gelände ermittelt werden,
- die Neigung des linken und/oder rechten Längsträgers (1,1') ermittelt wird und daraus
- die Positionen der wenigstens vier Punkte (A1, A2, A3, A4) im Referenz-Gelände abgeleitet werden.

3. Verfahren nach Anspruch 2, **dadurch gekennzeichnet, dass** die Positionen der Reflektoren (6,6') anhand einer Positionsbestimmung von wenigstens zwei Positionen im Referenz-Gelände aus ermittelt werden, insbesondere vermittels zweier Tachymeter (10,10').

4. Verfahren nach einem der vorangehenden Ansprüche, **dadurch gekennzeichnet, dass** die Neigungen der Längsträger (1,1') vermittels wenigstens einem, wenigstens einem der Längsträger (1,1') zugeordneten, insbesondere zweiachsigen, Neigungssensor (9,9') bestimmt werden.

5. Baumaschine mit einem System zum Steuern in Bezug auf Richtung und Höhenlage der in einer Arbeitsrichtung relativ zu einem Referenzgelände bewegbaren Baumaschine, mit
• einem Maschinenrahmen, welcher einen linken und rechten, im Wesentlichen parallel zur Arbeitsrichtung (AR) verlaufenden, Längsträger (1,1') umfasst,
• Laufwerken (4,4'), die anhand von Stellgliedern, insbesondere Zylindern, in Richtung und Höhe verstellbar sind,
• einer Geländebearbeitungs-Einrichtung, insbesondere einer Bohle (5), wobei die Geländebearbeitungs-Einrichtung mit den Längsträgern (1,1') mittel- oder unmittelbar verbunden ist,
• zur Positionsbestimmung von der Baumaschine zugeordneten Punkten
- wenigstens zwei Messeinrichtungen, insbesondere Tachymetern (10,10'),
bzw.
- GPS, und
• einer Einrichtung zum Bereitstellen und Verarbeiten von
- Informationen über den drei-dimensionalen Soll-Zustand eines zu bearbeitenden Geländes,
- Informationen über die drei-dimensionale Soll-Position der Geländebearbeitungs-Einrichtung,
- Informationen über die drei-dimensionale Ist-Position der Geländebearbeitungs-Einrichtung gegenüber der Soll-Position,
- Steueranweisungen für die Baumaschine durch Vergleich von Soll- und Ist-Position
**dadurch gekennzeichnet, dass**
• dem linken und rechten Längsträger (1,1') jeweils
- ein Reflektor (6,6'), insbesondere ein Prisma,
bzw.
- eine GPS-Empfängerantenne (8a,8a'), und
• wenigstens einem der Längsträger (1,1') ein, insbesondere zweiachsiger, Neigungssensor (9,9') zugeordnet ist.

6. Baumaschine nach Anspruch 5, **dadurch gekennzeichnet, dass** den Reflektoren (6,6') Masten (7,7') zugeordnet sind, welche Masten (7,7') an den Längsträgern (1,1') fixierbar sind.

7. Baumaschine nach Anspruch 6, **dadurch gekennzeichnet, dass** die Reflektoren (6,6') mit den Masten (7,7') fest verbunden sind, und dass die Verbindung im oberen Drittel der Masten erfolgt.

8. Baumaschine nach einem der Ansprüche 5 bis 7, **dadurch gekennzeichnet, dass** die wenigstens zwei Messeinrichtungen zur Positionsbestimmung Tachymeter (10,10') umfassen.

9. Baumaschine nach einem der Ansprüche 5 bis 8, **dadurch gekennzeichnet, dass** die Reflektoren (6,6') bzw. die Masten (7,7') bzw. die GPS-Empfängerantennen (8a,8a') den in Arbeitsrichtung AR der Baumaschine hinteren Enden der Längsträger (1,1') zugeordnet sind.

10. Baumaschine nach Anspruch 5 oder 9, **dadurch gekennzeichnet, dass** dem System eine GPS-Referenzstation zugeordnet ist.

11. Baumaschine nach einem der Ansprüche 5 bis 10, **dadurch gekennzeichnet, dass** der wenigstens einem Längsträger (1,1') zugeordnete Neigungssensor (9,9') mittig angeordnet ist.

12. Baumaschine nach einem der Ansprüche 5 bis 9 oder 11, **dadurch gekennzeichnet, dass** zur Positionsbestimmung der der Baumaschine zugeordneten Punkte auf elektromagnetischer Emission beruhende lokale Positioniersysteme vorgesehen sind, wobei deren Empfangsantennen anstelle der Reflektoren (6,6') angeordnet sind.

13. Baumaschine nach einem der Ansprüche 5 oder 9 bis 12, **dadurch gekennzeichnet, dass** zur Erhöhung der vertikalen Genauigkeit des globalen oder lokalen Positioniersystems wenigstens ein Laser-Ebenen-Generator mit entsprechendem Empfänger vorgesehen ist.

## Claims

1. A method for control in relation to direction and vertical position of a construction machine which can move in a working direction relative to a reference terrain, comprising
• a machine frame having a left and right longitudinal beam (1, 1') substantially parallel to the working direction (AR),
• running gears (4, 4') which are adjustable in direction and height by means of final control elements, in particular cylinders, and
• a terrain processing apparatus, in particular a screed (5), the terrain processing apparatus being indirectly or directly connected to the longitudinal beams (1, 1'), comprising the steps
• provision of information about the required three-dimensional state of a terrain to be processed,
• derivation of information about the required three-dimensional position of the terrain processing apparatus,
• provision of information about the actual three-dimensional position of the terrain processing apparatus relative to the required position,
• derivation of a control instruction for the construction machine by comparison of required and actual three-dimensional positions,
• control of the direction and the vertical position of the construction machine according to the derived control instruction,
wherein
the information about the actual position is obtained on the basis of the determination of the positions of at least four points (A1, A2, A3, A4), which can be coordinated with the terrain processing apparatus,relative to the positions of, in particular at least two, points in the reference terrain, the positions of the at least four points (A1, A2, A3, A4) on the terrain processing apparatus being determined by:
- determination of the longitudinal and transverse tilt of the left and/or right longitudinal beam (1, 1'),
- determination of the position of a point on the left longitudinal beam (1) relative to the position of a point in the reference terrain,
- determination of the position of a point on the right longitudinal beam (1') relative to the position of a point in the reference terrain,
- derivation of the positions of the at least four points (A1, A2, A3, A4) in the reference terrain.

2. The method as claimed in claim 1, wherein one reflector (6, 6') in each case is coordinated with the left and right longitudinal beam (1, 1') and the positions of the at least four points (A1, A2, A3, A4) on the terrain processing apparatus are determined by a procedure in which
- the positions of the reflectors (6, 6') in the reference terrain are determined,
- the tilt of the left and/or right longitudinal beam (1, 1') is determined and
- the positions of the at least four points (A1, A2, A3, A4) in the reference terrain are derived therefrom.

3. The method as claimed in claim 2, wherein the positions of the reflectors (6, 6') are determined on the basis of a position determination of at least two positions in the reference terrain, in particular by means of two tacheometers (10, 10').

4. The method as claimed in any of the preceding claims, wherein the tilts of the longitudinal beams (1, 1') are determined by means of at least one, in particular two-axis, tilt sensor (9, 9') coordinated with at least one of the longitudinal beams (1, 1').

5. Construction machine with a system for control in relation to direction and vertical position of the construction machine which can move in a working direction relative to a reference terrain, comprising
- a machine frame which comprises a left and right longitudinal beam (1, 1') substantially parallel to the working direction (AR),
- running gears (4, 4') which are adjustable in direction and height by means of final control elements, in particular cylinders,
- a terrain processing apparatus, in particular a screed (5), the terrain processing apparatus being indirectly or directly connected to the longitudinal beams (1, 1'),
• for determination of the position of points coordinated with the construction machine
- at least two measuring means, in particular tacheometers (10, 10'),
or
- GPS, and
• a means for providing and processing
- information about the required three-dimensional state of a terrain to be processed,
- information about the required three-dimensional position of the terrain processing apparatus,
- information about the actual three-dimensional position of the terrain processing apparatus relative to the required position,
- control instructions for the construction machine through comparison of required and actual positions,
wherein
• coordinated with the left and right longitudinal beams (1, 1') is in each case
- a reflector (6, 6'), in particular a prism,
or
- a GPS receiver antenna (8a, 8a'), and
• a tilt sensor (9, 9'), in particular two-axis tilt sensor, is coordinated with at least one of the longitudinal beams (1, 1').

6. The construction machine as claimed in claim 5, wherein masts (7,7') are coordinated with the reflectors (6, 6'), which masts (7, 7') can be fixed on the longitduinal beams (1, 1').

7. The construction machine as claimed in claim 6, wherein the reflectors (6, 6') are firmly connected to the masts (7, 7'), and wherein the connection is effected in the upper third of the masts.

8. The construction machine as claimed in any of claims 5 to 7, wherein the at least two measuring means for position determination comprise tacheometers (10, 10').

9. The construction machine as claimed in any of claims 5 to 8, wherein the reflectors (6, 6') or the masts (7, 7') or the GPS receiver antennas (8a, 8a') are coordinated with those ends of the longitudinal beams (1, 1') which are at the rear in the working direction AR of the construction machine.

10. The construction machine as claimed in claim 5 or 9, wherein a GPS reference station is coordinated with the system.

11. The construction machine as claimed in any of claims 5 to 10, wherein the tilt sensor (9, 9') coordinated with at least one longitudinal beam (1, 1') is arranged in the middle.

12. The construction machine as claimed in any of claims 5 to 9 or 11, wherein local positioning systems based on electromagnetic emission are proivded for determining the positions of the points coordinated with the construction machine, the receiving antennas of said positioning systems being arranged instead of the reflectors (6, 6').

13. The construction machine as claimed in any of claims 5 or 9 to 12, wherein at least one laser plane generator having a corresponding receiver is proivded for increasing the vertical accuracy of the global or local positioning system.

## Revendications

1. Procédé pour commander la direction et la position en hauteur d'une machine de génie civil pouvant être déplacée dans une direction de travail par rapport à un terrain de référence avec
• un cadre de machine avec un support longitudinal (1, 1') gauche et droit, essentiellement parallèles à la direction de travail (AR),
• des organes de roulement (4, 4') qui sont réglables en direction et en hauteur à l'aide d'éléments de réglage, en particulier de vérins et
• un dispositif de travail de terrain, en particulier un madrier (5), le dispositif de travail de terrain étant relié aux supports longitudinaux (1, 1') directement ou indirectement,
avec les étapes de
• mise à disposition d'informations sur l'état tridimensionnel désiré d'un terrain à travailler,
• dérivation d'informations sur la position tridimensionnelle désirée du dispositif de travail de terrain,
• mise à disposition d'informations sur l'état tridimensionnel réel du dispositif de travail de terrain pour ce qui est de la position désirée,
• dérivation d'une instruction de commande pour la machine de génie civil par comparaison des positions tridimensionnelles désirées et réelles,
• commande de la direction et de la position en hauteur de la machine de génie civil selon l'instruction de commande dérivée,
**caractérisé en ce que**
les informations sur la position réelle sont obtenues à l'aide de la détermination des positions d'au moins quatre des points (A1, A2, A3, A4) qui peuvent être assignés au dispositif de travail de terrain par rapport aux positions de points, en particulier d'au moins deux points, dans le terrain de référence, les positions des quatre points au moins (A1, A2, A3, A4) étant déterminées sur le dispositif de travail de terrain par :
- détermination de l'inclinaison en longueur et de l'inclinaison transversale du support longitudinal gauche et/ou droit (1, 1'),
- détermination de la position d'un point sur le support longitudinal gauche (1) par rapport à la position d'un point dans le terrain de référence,
- détermination de la position d'un point sur le support longitudinal droit (1') par rapport à la position d'un point dans le terrain de référence,
- dérivation des positions des au moins quatre points (A1, A2, A3, A4) dans le terrain de référence.

2. Procédé selon la revendication 1, **caractérisé en ce qu'**un réflecteur (6, 6') est assigné respectivement au support longitudinal gauche et droit (1, 1') et les positions des au moins quatre points (A1, A2, A3, A4) sont déterminées sur le dispositif de travail de terrain,
- les positions des réflecteurs (6, 6') étant déterminées dans le terrain de référence,
- l'inclinaison du support longitudinal gauche et/ou droit (1, 1') étant déterminée et
- les positions des au moins quatre points (A1, A2, A3, A4) dans le terrain de référence étant dérivées.

3. Procédé selon la revendication 2, **caractérisé en ce que** les positions des réflecteurs (6, 6') sont déterminées à l'aide d'une détermination de position d'au moins deux positions dans le terrain de référence, en particulier au moyen de deux tachymètres (10, 10').

4. Procédé selon l'une des revendications précédentes, **caractérisé en ce que** les inclinaisons des supports longitudinaux (1, 1') sont déterminées au moyen d'un détecteur d'inclinaison (9, 9'), en particulier à deux axes, assigné à au moins l'un des supports longitudinaux (1, 1').

5. Machine de génie civil avec un système pour commander la direction et la position en hauteur de la machine de génie civil pouvant être déplacée dans une direction de travail par rapport à un terrain de référence avec
• un cadre de machine qui comprend un support longitudinal (1, 1') gauche et droit, essentiellement parallèles à la direction de travail (AR),
• des organes de roulement (4, 4') qui sont réglables en direction et en hauteur à l'aide d'éléments de réglage, en particulier de vérins,
• un dispositif de travail de terrain, en particulier un madrier (5), le dispositif de travail de terrain étant relié aux supports longitudinaux (1, 1') directement ou indirectement,
• pour la détermination de la position de points assignés à la machine de génie civil
- au moins deux dispositifs de mesure, en particulier des tachymètres (10, 10') ou
- un GPS et
• un dispositif pour mettre à disposition et traiter
- des informations sur l'état tridimensionnel désiré d'un terrain à travailler,
- des informations sur la position tridimensionnelle désirée du dispositif de travail de terrain,
- des informations sur la position tridimensionnelle réelle du dispositif de travail de terrain par rapport à la position désirée,
- des instructions de commande pour la machine de génie civil par comparaison de la position désirée et de la position réelle
**caractérisée en ce**
• **qu'**il est assigné respectivement au support longitudinal gauche et droit (1, 1')
- un réflecteur (6, 6'), en particulier un prisme
et/ou
- une antenne de récepteur GPS (8a, 8a') et
• **qu'**un détecteur d'inclinaison (9, 9'), en particulier à deux axes, est assigné à au moins l'un des supports longitudinaux (1, 1').

6. Machine de génie civil selon la revendication 5, **caractérisée en ce que** des mâts (7, 7') sont assignés aux réflecteurs (6, 6'), mâts (7, 7') qui peuvent être fixés aux supports longitudinaux (1, 1').

7. Machine de génie civil selon la revendication 6, **caractérisée en ce que** les réflecteurs (6, 6') sont reliés de manière fixe aux mâts (7, 7') et que la jonction est effectuée dans le tiers supérieur des mâts.

8. Machine de génie civil selon l'une des revendications 5 à 7, **caractérisée en ce que** les au moins deux dispositifs de mesure pour la détermination de la position comprennent des tachymètres (10, 10').

9. Machine de génie civil selon l'une des revendications 5 à 8, **caractérisée en ce que** les réflecteurs (6, 6') ou les mâts (7, 7') ou les antennes des récepteurs GPS (8a, 8a') sont assignées aux extrémités postérieures des supports longitudinaux (1, 1') dans la direction de travail AR de la machine de génie civil.

10. Machine de génie civil selon la revendication 5 ou 9, **caractérisée en ce qu'**une station de référence GPS est assignée au système.

11. Machine de génie civil selon l'une des revendications 5 à 10, **caractérisée en ce que** le détecteur d'inclinaison (9, 9') assigné à au moins un support longitudinal (1, 1') est placé au milieu.

12. Machine de génie civil selon l'une des revendications 5 à 9 ou 11, **caractérisée en ce que** des systèmes de positionnement locaux basés sur l'émission électromagnétique sont prévus pour la détermination de la position des points assignés à la machine de génie civil, leurs antennes de réception étant placées à la place des réflecteurs (6, 6').

13. Machine de génie civil selon l'une des revendications 5 ou 9 à 12, **caractérisée en ce qu'**il est prévu au moins un générateur de plan laser avec un récepteur correspondant pour augmenter la précision verticale du système de positionnement global ou local.
